(19) Europäisches Patentamt
European Patent Office
Office européen des brevets

(11) EP 0 537 866 B1

(12) EUROPEAN PATENT SPECIFICATION

(45) Date of publication and mention of the grant of the patent:
**15.01.1997 Bulletin 1997/03**

(51) Int Cl.[6]: **C10L 1/18**, C10L 1/22, C10L 1/24

(21) Application number: **92204083.7**

(22) Date of filing: **27.02.1989**

# (54) Fuel oils containing polyanhydride modified dispersants

Brennstofföle mit einem Gehalt an modifizierten Polyanhydrid-Dispergiermitteln

Huiles combustibles contenants des dispersants modifiées à base de polyanhydrides

(84) Designated Contracting States:
**DE GB**

(30) Priority: **29.02.1988 US 161919**

(43) Date of publication of application:
**21.04.1993 Bulletin 1993/16**

(62) Application number of earlier application in accordance with Art. 76 EPC: **89301932.3**

(73) Proprietor: **EXXON CHEMICAL PATENTS INC.**
**Florham Park New Jersey 07932 (US)**

(72) Inventors:
- **Lundberg, Robert Dean**
  **Bridgewater, New Jersey 08807 (US)**
- **Emert, Jacob**
  **Brooklyn, New York 11218 (US)**
- **Gutierrez, Antonio**
  **Mercerville, New Jersey 08619 (US)**

(74) Representative: **Northover, Robert Frank et al**
**Exxon Chemical Limited**
**Exxon Chemical Technology Centre**
**PO Box 1**
**Abingdon Oxfordshire, OX13 6BB (GB)**

(56) References cited:
**WO-A-86/05501**
**WO-A-87/05926**
**US-A- 3 539 633**
**US-A- 3 558 743**
**US-A- 4 234 435**
**US-A- 4 354 950**
**US-A- 4 713 189**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 537 866 B1

## Description

This invention relates to oil soluble dispersants. EP-A-337,602 from which this application is divided is directed to certain of the dispersant additives hereafter defined and their use in lubricating oil compositions. The present application is concerned with fuel oil compositions containing dispersant additives as hereafter defined.

According to the invention there are provided fuel oil composition comprising a major amount of fuel oil and a minor amount of an oil soluble dispersant additive comprising the reaction product of:

(i) at least one intermediate adduct comprised of the reaction products of

(a) at least one polyanhydride containing at least two dicarboxylic acid anhydride groups joined by a polyvalent hydrocarbon moiety containing from 2 to 50 carbon atoms and optionally containing at least one of oxygen, sulfur, carboxy, carbonyl, sulfonyl, sulfinyl and nitro groups in the hydrocarbon chain and/or being substituted by one or more alkyl, hydroxyl, tertiary amino and halogen groups; and
(b) at least one member selected from polyols, aminoalcohols and polyamines, said polyamines containing at least two reactive amino groups, one being a primary amine group and the other being a primary or secondary amine group, and

(ii) at least one member selected from

(a) at least one long chain hydrocarbyl substituted $C_4$-$C_{10}$ dicarboxylic acid producing material in which the long chain hydrocarbyl group has a number average molecular weight from 500 to 6,000, and
(b) at least one long chain hydrocarbyl substituted hydroxy aromatic material and at least one aldehyde wherein said long chain aromatic material comprises a phenol substituted by a hydrocarbyl group having from 50 to 300 carbon atoms.

Preferably said dicarboxylic acid producing material (ii)(a) is a reaction product of an olefin polymer of a $C_2$-$C_{18}$ monoolefin having a number average molecular weight from 500 to 6,000 and a $C_4$-$C_{10}$ monounsaturated dicarboxylic acid producing material wherein there are an average of 0.7 to 2.0 dicarboxylic acid producing moieties per molecule of said olefin polymer used in the reaction.

Preferred embodiments of the invention are hereafter described in more detail.

The reaction product (i), also referred to in the specification and appended claims as the intermediate adduct, is preformed and is then reacted with either (ii) (a) or (ii)(b) to form the adduct or dispersant of the present invention. If (i)(b) is a polyamine then it contains at least two reactive amino groups, one of said amino groups being a primary amino group and the other reactive amino group being a primary amino group or a secondary amino group.

In a preferred embodiment of the instant invention (i)(b) is a polyamine, and in the following discussion concerning the reaction between (i)(a) and (i)(b) to form the intermediate adduct, (i)(b) will be assumed to be such a polyamine.

For purposes of illustration and exemplification only the reaction between one mole of a polyanhydride, e.g., a dianhydride, and two moles of a polyamine such as tetraethylene pentamine (TEPA) to form the intermediate adduct is believed to be represented by the following reaction scheme:

Eq. 1

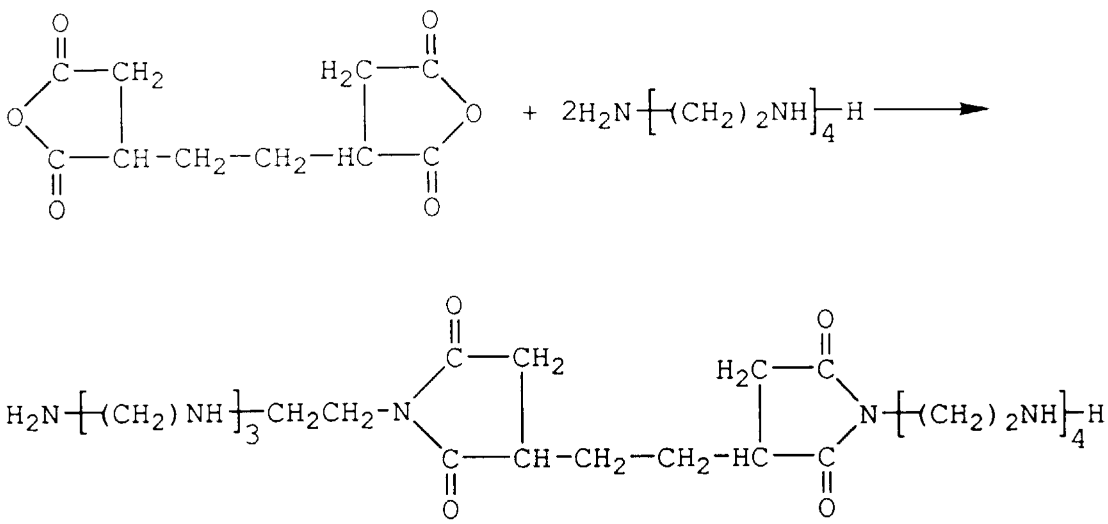

This intermediate adduct is then reacted with either (ii)(a) or (ii)(b) to form the dispersant of this invention. For purpose of illustration and exemplification only if this intermediate adduct is reacted with (ii)(a), such as polyisobutenyl succinic anhydride, i.e., 2 moles of

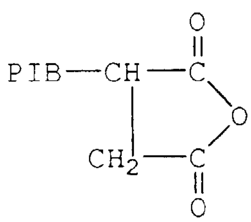

wherein PIB represents polyisobutylene having a number average molecular weight of from 500 to 6,000, the product is a mixture of amides, imides and esters, e.g., (A)

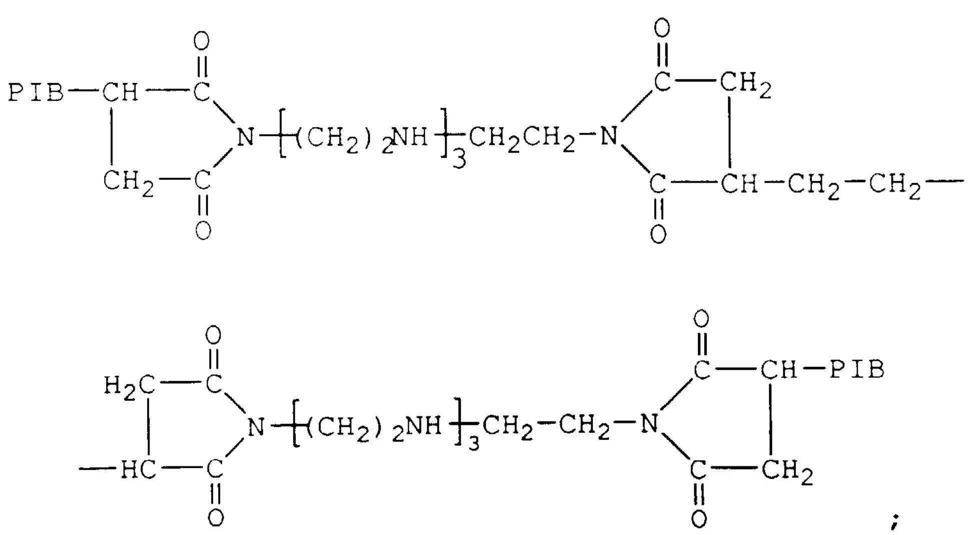

;

and/or

(B)

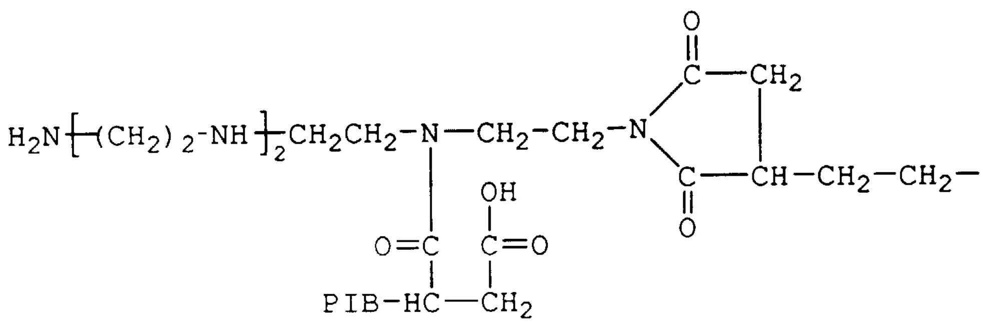

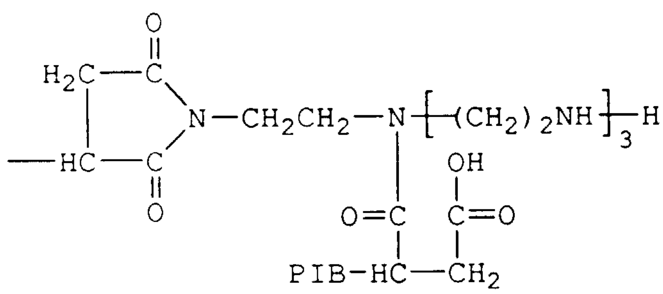

;

and/or

(C)

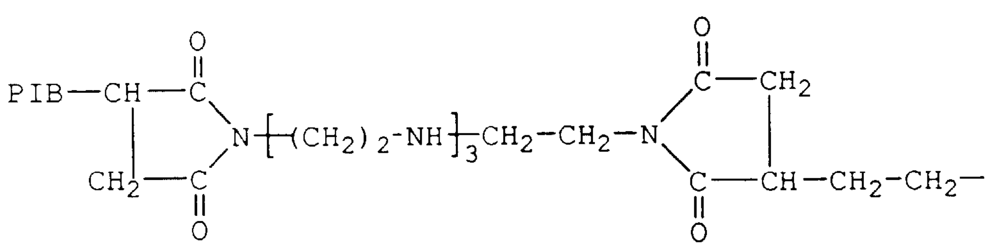

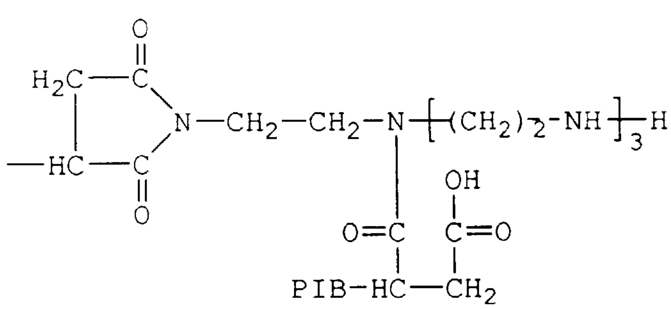

Product A is an imide formed by the reaction of both moles of polyisobutenyl succinic anhydride (ii)(a) with the primary amino groups of the intermediate adduct. Product B is an imide-amide formed by the reaction of one mole of polyisobutenyl succinic anhydride (ii) (a) with a primary amino group of the intermediate adduct and the reaction of the second mole of (ii) (a) with a secondary amino group of the intermediate adduct. Product C is formed by the reaction of both

moles of (ii)(a) with secondary amino groups of the intermediate adduct (i).

If the intermediate adduct is reacted with (ii)(b) the reaction may be represented as follows:

Eq. 2

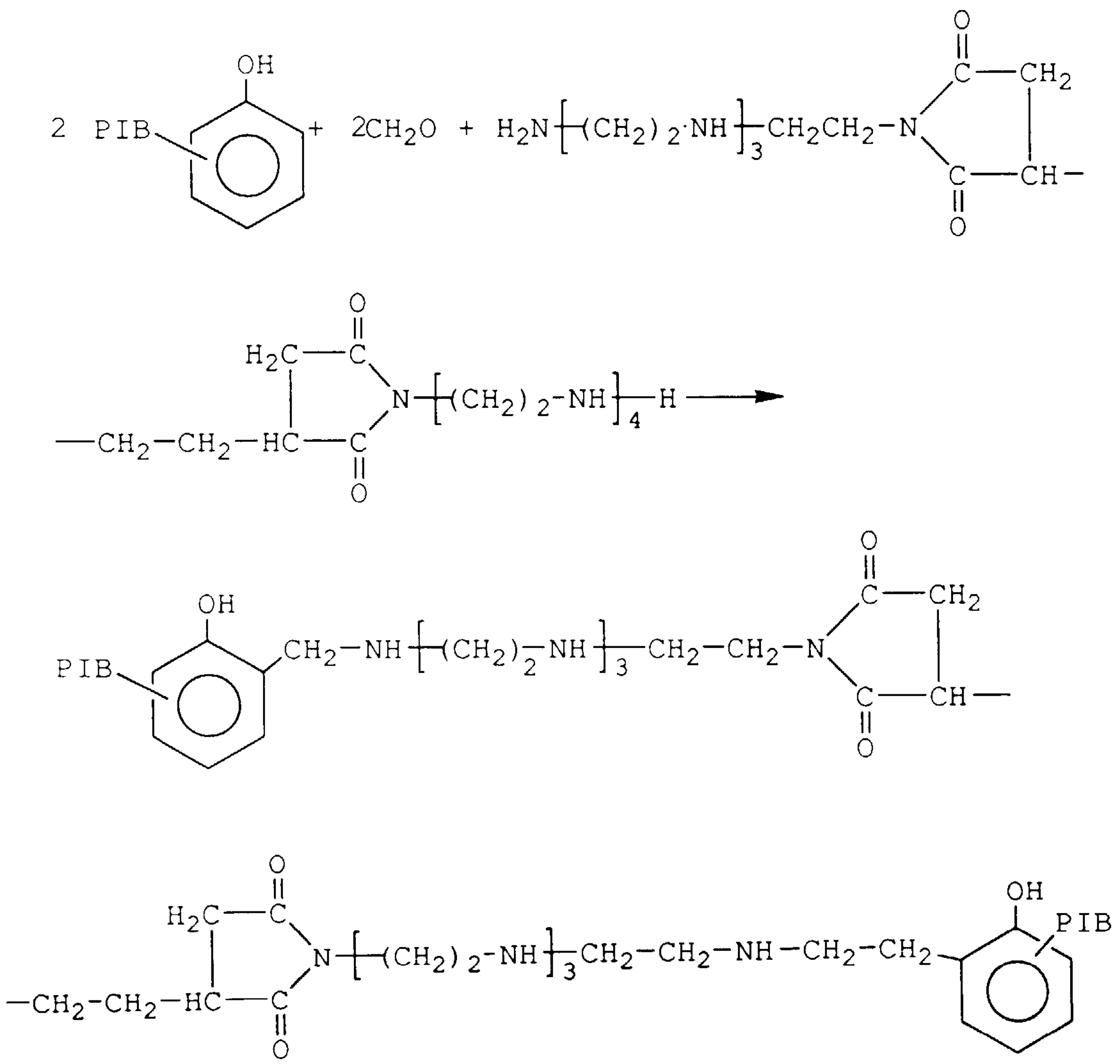

ACID PRODUCING MATERIAL

The long chain hydrocarbon substituted $C_4$ - $C_{10}$ dicarboxylic acid producing materials or acylating agents which may be reacted with the polyanhydride-polyamine, polyanhydride-polyol, and/or polyanhydride-amino alcohol intermediate adducts to form the dispersant additives of the instant invention are dicarboxylic acid materials, e.g., acid, anhydride or ester materials, which are substituted with a long chain hydrocarbyl group, generally a polyolefin, and which contain typically an average of at least 0.7, usefully from 0.7 - 2.0 (e.g., 0.9 - 1.6) preferably 1.0 - 1.3 (e.g., 1.1 - 1.2) moles, per mole of hydrocarbyl, of a $C_4$ to $C_{10}$ dicarboxylic acid, anhydride or ester thereof, such as succinic acid, succinic anhydride, dimethyl methylsuccinate, and mixtures thereof.

The hydrocarbyl substituted dicarboxylic acid materials, as well as methods for their preparation, are well known in the art and are amply described in the patent literature. They may be obtained, for example, by the Ene reaction between a polyolefin and an alpha-beta unsaturated $C_4$ to $C_{10}$ dicarboxylic acid, anhydride or ester thereof, such as fumaric acid, itaconic acid, maleic acid, maleic anhydride, chloromaleic acid, dimethyl fumarate, etc.

The hydrocarbyl substituted dicarboxylic acid materials function as acylating agents for the polyepoxide intermediate adduct.

Preferred olefin polymers for reaction with the unsaturated dicarboxylic acid, anhydride, or ester are polymers comprising a major molar amount of $C_2$ to $C_8$, e.g. $C_2$ to $C_5$, monoolefin. Such olefins include ethylene and propylene,

butylene, isobutylene, pentene, octene-1, styrene. The polymers can be homopolymers such as polyisobutylene, as well as copolymers of two or more of such olefins such as copolymers of: ethylene and propylene; butylene and isobutylene; propylene and isobutylene. Other copolymers include those in which a minor molar amount of the copolymer monomers, e.g., 1 to 10 mole %, is a $C_4$ to $C_{18}$ non-conjugated diolefin, e.g., a copolymer of isobutylene and butadiene; or a copolymer of ethylene, propylene and 1,4-hexadiene.

In some cases the olefin polymer may be completely saturated, for example an ethylene-propylene copolymer made by a Ziegler-Natta synthesis using hydrogen as a moderator to control molecular weight.

The olefin polymers have number average molecular weights ($\overline{M}_n$) from 500 to 6000, e.g. 700 to 3000, preferably from 800 to 2500. An especially useful starting material for a highly potent dispersant additive made in accordance with this invention is polyisobutylene.

Processes for reacting the olefin polymer with the $C_4$-$C_{10}$ unsaturated dicarboxylic acid, anhydride or ester are known in the art. For example, the olefin polymer and the dicarboxylic acid material may be simply heated together as disclosed in US-A-3,361,673 and 3,401,118 to cause a thermal "ene" reaction to take place. Alternatively, the olefin polymer can be fist halogenated, for example, chlorinated or brominated to 1 to 8 wt. %, preferably 3 to 7 wt. % chlorine or bromine, based on the weight of polymer, by passing the chlorine or bromine through the polyolefin at a temperature of 25 to 160°C, e.g., 120°C, for 0.5 to 10, preferably 1 to 7 hours. The halogenated polymer may then be reacted with sufficient unsaturated acid or anhydride at 100 to 250°C, usually 180 to 220°C., for 0.5 to 10 hours, e.g. 3 to 8 hours, so the product obtained will contain an average of 1.0 to 2.0 moles, preferably 1.1 to 1.4 moles, e.g., 1.2 moles, of the unsaturated acid per mole of the halogenated polymer. Processes of this general type are taught in US-A-3,087,436; 3,172,892; 3,272,746 and others.

Alternatively, the olefin polymer and the unsaturated acid material are mixed and heated while adding chlorine to the hot material. Processes of this type are disclosed in US-A-3,215,707; 3,231,587; 3,912,764; 4,110,349; 4,234,435; and in GB-A-1,440,219.

By the use of halogen, 65 to 95 wt. % of the polyolefin, e.g. polyisobutylene, will normally react with the dicarboxylic acid material. Upon carrying out a thermal reaction without the use of halogen or a catalyst, then usually only 50 to 85 wt. % of the polyisobutylene will react. Chlorination helps increase the reactivity. For convenience, all of the aforesaid functionality ratios of dicarboxylic acid producing units to polyolefin, e.g. 1.0 to 2.0. are based upon the total amount of polyolefin, that is, the total of both the reacted and unreacted polyolefin, present in the resulting product formed in the aforesaid reactions.

THE LONG CHAIN HYDROCARBON SUBSTITUTED HYDROXY AROMATIC MATERIAL

The hydrocarbyl substituted hydroxy aromatic compounds used in the invention include those compounds having the formula

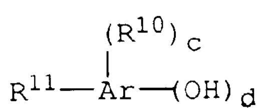

wherein Ar represents

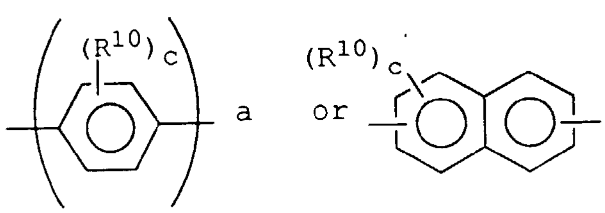

wherein a is 1 or 2, $R^{11}$ is a long chain hydrocarbon $R^{10}$ is a hydrocarbon or substituted hydrocarbon radical having from 1 to 3 carbon atoms or a halogen radical such as the bromide or chloride radical, f is an integer from 1 to 2, c is an integer from 0 to 2, and d is an integer from 1 to 2.

Illustrative of such Ar groups are phenylene, biphenylene, naphthylene and the like.

The preferred long chain hydrocarbon substituents are olefin polymers comprising a major molar amount of $C_2$ to $C_{10}$, e.g. $C_2$ to $C_5$ monoolefin. Such olefins include ethylene, propylene, butylene, pentene, octene-1 and styrene. The

polymers can be homopolymers such as polyisobutylene, as well as copolymers of two or more of such olefins such as copolymers of: ethylene and propylene; butylene and isobutylene; propylene and isobutylene; etc. Other copolymers include those in which a minor molar amount of the copolymer monomers is a diene, e.g., a copolymer of isobutylene and butadiene; or a copolymer of ethylene, propylene and 1,4-hexadiene.

In some cases, the olefin polymer may be completely saturated, for example an ethylene-propylene copolymer made by a Ziegler-Natta synthesis using hydrogen as a moderator to control molecular weight.

The olefin polymers will usually have a number average molecular weight ($\bar{M}n$) from 500 to 7,000, more usually from 700 to 3,000. Particularly useful olefin polymers have a number average molecular weight from 800 to 2500, and more preferably from 850 to 1,000 with approximately one terminal double bond per polymer chain. An especially useful starting material for a highly potent dispersant additive made in accordance with this invention is polyisobutylene. The number average molecular weight for such polymers can be determined by several known techniques. A convenient method for such determination is by gel permeation chromatography (GPC) which additionally provides molecular weight distribution information, see W. W. Yau, J. J. Kirkland and D. D. Bly, "Modern Size Exclusion Liquid Chromatography", John Wiley and Sons, New York, 1979.

Processes for substituting the hydroxy aromatic compounds with the olefin polymer are known in the art and may be depicted as follows:

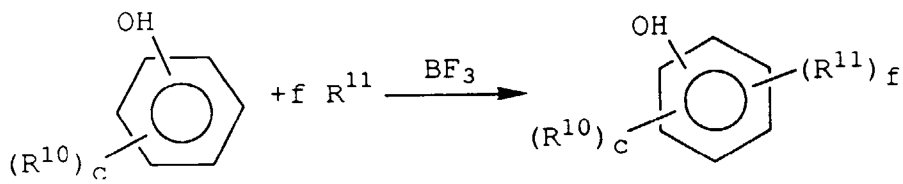


where $R^{10}$, $R^{11}$, f and c are as previously defined, and $BF_3$ is an alkylating catalyst. Processes of this type are described, for example, in US-A-3,539,633 and 3,649,229.

Representative hydrocarbyl substituted hydroxy aromatic compounds contemplated for use in the present invention include, but are not limited to, 2-polypropylene phenol, 3-polypropylene phenol, 4-polypropylene phenol, 2-polybutylene phenol, 3-polyisobutylene phenol, 4-polyisobutylene phenol, 4-polyisobutylene-2-chlorophenol, 4-polyisobutylene-2-methylphenol, and the like.

Suitable hydrocarbyl-substituted polyhydroxy aromatic compounds include the polyolefin catechols, the polyolefin resorcinols, and the polyolefin hydroquinones, e.g., 4-polyisobutylene-1,2-dihydroxybenzene, 3-polypropylene-1,2-dihydroxy-benzene, 5-polyisobutylene-1,3-dihydroxybenzene, 4-polyamylene-1,3-dihydroxybenzene, and the like.

Suitable hydrocarbyl-substituted naphthols include 1-polyisobutylene-5-hydroxynaphthalene, 1-polypropylene-3-hydroxynaphthalene and the like.

The preferred long chain hydrocarbyl substituted hydroxy aromatic compounds to be used in this invention can be illustrated by the formula:

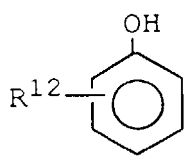

III

wherein $R^{12}$ is hydrocarbyl of from 50 to 300 carbon atoms, and preferably is a polyolefin derived from a $C_2$ to $C_{10}$ (e.g., $C_2$ to $C_5$) mono-alpha-olefin.

THE ALDEHYDE MATERIAL

The aldehyde material which can be employed in this invention is represented by the formula:

$$R^{13}CHO$$

in which $R^{13}$ is a hydrogen or an aliphatic hydrocarbon radical having from 1 to 4 carbon atoms. Examples of suitable aldehydes include formaldehyde, paraformaldehyde, acetaldehyde and the like.

POLYAMINES

Amine compounds useful as reactants with the polyanhydride to form the polyanhydride-polyamine intermediate adduct are those containing at least two reactive amino groups, one being primary and the other being primary or secondary. They include polyalkylene polyamines, of 2 to 60 (e.g. 2 to 30) , preferably 2 to 40, (e.g. 3 to 20) total carbon atoms and 1 to 12 (e.g., 2 to 9) , preferably 3 to 12, and most preferably 3 to 9 nitrogen atoms in the molecule. These amines may be hydrocarbyl amines or may be hydrocarbyl amines including other groups, e.g, hydroxy groups, alkoxy groups, amide groups, nitriles, imidazoline groups, and the like. Hydroxy amines with 1 to 6 hydroxy groups, preferably 1 to 3 hydroxy groups are particularly useful. Such amines should be capable of reacting with the acid or anhydride groups of the hydrocarbyl substituted dicarboxylic acid moiety and with the anhydride groups of the polyanhydride moiety through the amino functionality or a substituent group reactive functionality. Since tertiary amines are generally unreactive with anhydrides it is desirable to have at least two primary and/or secondary amino groups on the amine. It is preferred that the amine contain at least one primary amino group, for reaction with the polyanhydride, and at least one secondary amino group, for reaction with the acylating agent. Preferred amines are aliphatic saturated amines, including those of the general formulae:

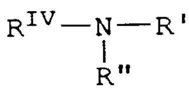

(I)

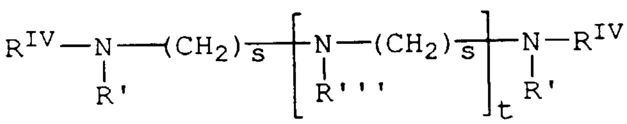

(Ia)

wherein $R^{IV}$, R' and R''' are independently selected from the group consisting of hydrogen; $C_1$ to $C_{25}$ straight or branched chain alkyl radicals; $C_1$ to $C_{12}$ alkoxy $C_2$ to $C_6$ alkylene radicals; $C_2$ to $C_{12}$ hydroxy amino alkylene radicals; and $C_1$ to $C_{12}$ alkylamino $C_2$ to $C_6$ alkylene radicals;

and wherein each s can be the same or a different number of from 2 to 6, preferably 2 to 4; and t and t' can be the same or different and are each numbers of typically from 0 to 10, preferably 2 to 7, most preferably 3 to 7, with the proviso that t + t' is not greater than 10. To assure a facile reaction it is preferred that $R^{IV}$, R', R''', (s) and (t) be selected in a manner sufficient to provide the compounds of formula Ia with typically at least two primary and/or secondary amino groups. This can be achieved by selecting at least one of said $R^{IV}$ and R' groups to be hydrogen when t=0 or by letting (t) in formula Ia be at least one when R''' is H or when the (Ib) moiety possesses a secondary amino group. The most preferred amines of the above formulas are represented by formula Ia and contain at least two primary amino groups and at least one, and preferably at least three, secondary amino groups.

Non-limiting examples of suitable amine compounds include: 1,2-diaminoethane; 1,3-diaminopropane; 1,4-diaminobutane; 1,6-diaminohexane; polyethylene amines such as diethylene triamine; triethylene tetramine; tetraethylene pentamine; polypropylene amines such as 1,2-propylene diamine; di-(1,2-propylene) triamine; di-(1,3-propylene) triamine; N,N-dimethyl-1, 3-diaminopropane; N,N-di-(2-aminoethyl) ethylene diamine; N-dodecyl-1,3-propane diamine; diisopropanol amine; mono-, di-, and tri-tallow amines; amino morpholines such as N-(3-aminopropyl) morpholine; and mixtures thereof.

Other useful amine compounds include: alicyclic diamines such as 1,4-di(aminoethyl) cyclohexane, and N-aminoalkyl piperazines of the general formula:

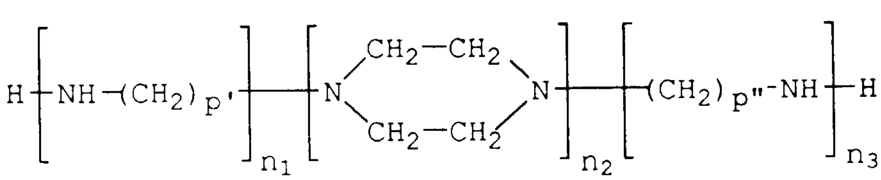

(II)

wherein $p_1$ and $p_2$ are the same or different and are each integers of from 1 to 4, and $n_1$, $n_2$ and $n_3$ are the same or different and are each integers of from 1 to 3.

Commercial mixtures of amine compounds may advantageously be used. For example, one process for preparing alkylene amines involves the reaction of an alkylene dihalide (such as ethylene dichloride or propylene dichloride) with ammonia, which results in a complex mixture of alkylene amines wherein pairs of nitrogens are joined by alkylene groups, forming such compounds as diethylene triamine, triethylenetetramine, tetraethylene pentamine and corresponding piperazines. Low cost poly(ethyleneamine) compounds averaging 5 to 7 nitrogen atoms per molecule are available commercially under trade names such as "Polyamine H", "Polyamine 400", "Dow Polyamine E-100".

Useful amines also include polyoxyalkylene polyamines such as those of the formulae:

$$NH_2\text{—alkylene}\left(\text{O-alkylene}\right)_m NH_2 \qquad \text{(III)}$$

where m has a value of 3 to 70 and preferably 10 to 35; and

$$R^V\left(\text{alkylene}\left(\text{O-alkylene}\right)_n NH_2\right)_a \qquad \text{(IV)}$$

where n has a value of 1 to 40, with the provision that the sum of all the n's is from 3 to 70, and preferably from 6 to 35, and $R^V$ is a substituted saturated hydrocarbon radical of up to 10 carbon atoms, wherein the number of substituents on the $R^V$ group is from 3 to 6, and "a" is a number from 3 to 6 which represents the number of substituents on $R^V$. The alkylene groups in either formula (III) or (IV) may be straight or branched chains containing 2 to 7, and preferably 2 to 4 carbon atoms.

The polyoxyalkylene polyamines of formulas (III) or (IV) above, preferably polyoxyalkylene diamines and polyoxyalkylene triamines, may have number average molecular weights ranging from 200 to 4000 and preferably from 400 to 2000. The preferred polyoxyalkylene polyamines include the polyoxyethylene and polyoxypropylene diamines and the polyoxypropylene triamines having average molecular weights ranging from 200 to 2000. The polyoxyalkylene polyamines are commercially available and may be obtained, for example, from the Jefferson Chemical Company, Inc. under the trade name "Jeffamines D-230, D-400, D-1000, D-2000, and T-403".

The polyamine is readily reacted with the polyanhydride, with or without a catalyst, simply by heating a mixture of the polyanhydride and polyamine in a reaction vessel at a temperature of 30°C to 200°C, more preferably to a temperature of 75°C to 180°C, and most preferably at 90°C to 160°C, for a sufficient period of time to effect reaction. A solvent for the polyanhydride, polyamine and/or intermediate adduct can be employed to control viscosity and/or reaction rates.

Catalysts useful in the promotion of the above-identified polyanhydride-polyamine reactions are selected from the group consisting of stannous octanoate, stannous hexanoate, stannous oxalate, tetrabutyl titanate, a variety of metal organic based catalyst acid catalysts and amine catalysts, as described on page 266, and forward in a book chapter authorized by R. D. Lundberg and E. F. Cox entitled, "Kinetics and Mechanisms of Polymerization: Ring Opening Polymerization", edited by Frisch and Reegen, published by Marcel Dekker in 1969, wherein stannous octanoate is an especially preferred catalyst. The catalyst is added to the reaction mixture at a concentration level of 50 to 10,000 parts of catalyst per one million parts by weight of the total reaction mixture.

## POLYOL

In another aspect of the invention the polyanhydride intermediate adducts are prepared by reacting the polyanhydride with a polyol instead of with a polyamine.

Suitable polyol compounds which can be used include aliphatic polyhydric alcohols containing up to about 100 carbon atoms and 2 to 10 hydroxyl groups. These alcohols can be quite diverse in structure and chemical composition, for example, they can be substituted or unsubstituted, hindered or unhindered, branched chain or straight chain as desired. Typical alcohols are alkylene glycols such as ethylene glycol, propylene glycol, trimethylene glycol, butylene glycol, and polyglycol such as diethylene glycol, triethylene glycol, tetraethylene glycol, dipropylene glycol, tripropylene glycol, dibutylene glycol, tributylene glycol, and other alkylene glycols and polyalkylene glycols in which the alkylene radical contains from two to eight carbon atoms. Other useful polyhydric alcohols include glycerol, monomethyl ether of glycerol, pentaerythritol, dipentaerythritol, tripentaerythritol, 9,10-dihydroxystearic acid, the ethyl ester of 9,10-dihydroxystearic acid, 3-chloro-1,2-propanediol, 1,2-butanediol, 1,4-butanediol, 2,3-hexanediol, pinacol, tetrahydroxy pentane, erythritol, arabitol, sorbitol, mannitol, 1,2-cyclohexanediol, 1,4-cyclohexanediol, 1,4-(2-hydroxyethyl)-cyclohexane, 1,4-dihydroxy-2-nitrobutane, 1,4-di-(2-hydroxyethyl)benzene, the carbohydrates such as glucose, mannose, glyceraldehyde, and galactose, and the like, copolymers of allyl alcohol and styrene, N,N'-di-(2-hydroxylethyl) glycine and esters thereof with lower mono-and polyhydric aliphatic alcohols.

Included within the group of aliphatic alcohols are those alkane polyols which contain ether groups such as polyethylene oxide repeating units, as well as those polyhydric alcohols containing at least three hydroxyl groups, at least one of which has been esterified with a mono-carboxylic acid having from 8 to 30 carbon atoms such as octanoic acid, oleic acid, stearic acid, linoleic acid, dodecanoic acid, or tall oil acid. Examples of such partially esterified polyhydric alcohols are the mono-oleate of sorbitol, the mono-oleate of glycerol, the monostearate of glycerol, the di-stearate of sorbitol, and the di-dodecanoate of erythritol.

A preferred class of intermediates are those prepared from aliphatic alcohols containing up to 20 carbon atoms, and especially those containing three to 15 carbon atoms. This class of alcohols includes glycerol, erythritol, pentaerythritol, dipentaerythritol, tripentaerythritol, gluconic acid, glyceraldehyde, glucose, arabinose, 1,7-heptanediol, 2,4-heptanediol, 1,2,3-hexanetriol, 1,2,4-hexanetriol, 1,2,5-hexanetriol, 2,3,4-hexanetriol, 1,2,3-butanetriol, 1,2,4-butanetriol, quinic acid, 2,2,6,6-tetrakis(hydroxymethyl)-cyclohexanol, 1,10-decanediol, digitalose, and the like. The adducts prepared from aliphatic alcohols containing at least three hydroxyl groups and up to fifteen carbon atoms are particularly preferred.

An especially preferred class of polyhydric alcohols for preparing the polyanhydride adducts used as intermediate materials or dispersant precursors in the present invention are the polyhydric alkanols containing three to 15, especially three to six carbon atoms and having at least three hydroxyl groups. Such alcohols are exemplified in the above specifically identified alcohols and are represented by glycerol, erythritol, pentaerythritol, mannitol, sorbitol, 1,2,4-hexanetriol, and tetrahydroxy pentane and the like.

The polyol is readily reacted with the polyanhydride by heating a mixture of the polyol and polyanhydride in a reaction vessel at a temperature of 50°C to 200°C, more preferably to a temperature of 75°C to 180°C, and most preferable at 90°C to 160°C, for a sufficient period of time to effect reaction. Optionally, a solvent for the polyanhydride, polyol and/or the resulting adduct may be employed to control viscosity and/or the reaction rates.

Catalysts useful in the promotion of the polyanhydride-polyol reactions are the same as those which are useful in connection with the polyanhydride-polyamine reactions discussed above. The catalyst may be added to the reaction mixture at a concentration level of from 50 to 10,000 parts of catalyst per one million parts by weight of total reaction mixture.

## AMINO ALCOHOL

In a manner analogous to that described for the polyanhydride-polyamine reaction and for the polyanhydride-polyol reaction, the polyanhydride can be reacted with an amino alcohol to form an intermediate adduct which can be further reacted with an acylating agent to form the dispersants of this invention.

Suitable amino alcohol compounds which can be reacted with the polyanhydride include those containing up to 50 total carbon atoms and preferably up to 10 total carbon atoms, from 1 to 5 nitrogen atoms, preferably from 1 to 3 nitrogen atoms, and from 1 to 15 hydroxyl groups, preferably from 1 to 5 hydroxyl groups. Preferred amino alcohols include the 2,2-disubstituted-2-amino-1-alkanols having from two to three hydroxy groups and containing a total of 4 to 8 carbon atoms. These amino alcohols can be represented by the formula:

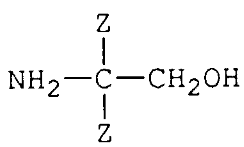 .

wherein Z is independently an alkyl or hydroxyalkyl group with the alkyl groups having from 1 to 3 carbon atoms wherein at least one, and preferably both, of the X substituents is a hydroxyalkyl group of the structure - $(CH_2)_nOH$, n being 1 to 3. Examples of such amino alcohols include: tri-(3-hydroxypropyl) amine; 2-amino-2-methyl-1,3-propanediol; 2-amino-2-ethyl-1,3-propanediol; and 2-amino-2(hydroxymethyl)-1,3-propanediol; the latter also being known as THAM or tris(hydroxymethyl) amino methane. THAM is particularly preferred because of its effectiveness, availability and low cost.

The amino alcohol is readily reacted with the polyanhydride by heating a mixture of the polyanhydride and amino alcohol in a reaction vessel at a temperature of 50°C to 200°C, more preferably at temperature of 75°C to 180°C, and most preferably at 90°C to 160°C, for a sufficient period of time to effect reaction. Optionally, a solvent for the polyanhydride, amino alcohol and/or the reaction product may be used to control viscosity and/or the reaction rates.

Catalysts useful in the promotion of the polyanhydride-amino alcohol reactions are the same as those which are useful in connection with the polyanhydride-polyamine and polyanhydride-polyol reactions, and corresponding amounts of catalysts may be employed.

## POLYANHYDRIDES

The polyanhydrides which are reacted with the aforedescribed polyamines, polyols and/or amino alcohols to form the intermediate adducts or dispersant precursors of the instant invention are compounds containing at least two dicarboxylic acid anhydride moieties. These anhydride moieties are connected or joined by polyvalent hydrocarbon moieties or hydrocarbon moieties containing at least one hetero atom or group. The hydrocarbon moieties generally contain from 2 to 50 carbon atoms. These hydrocarbon moieties may be aliphatic, either saturated aliphatic or unsaturated aliphatic, cycloaliphatic, aromatic, or aliphatic aromatic. They may be monomeric or polymeric, e.g., polyisobutylene, in character. The aliphatic hydrocarbon moieties contain from 2 to 50, carbon atoms. The cycloaliphatic hydrocarbon moieties contain from 4 to 16 ring carbon atoms. The ring carbon atoms may contain substituent groups, e.g., alkyl groups such as $C_1$ - $C_{10}$ alkyl groups thereon. The aromatic hydrocarbon moieties contain from 6 to 20 ring carbon atoms. The aliphatic-aromatic moieties contain from 7 to 50, carbon atoms. The hydrocarbon moieties joining the anhydride groups may contain substituent groups thereon. The substituent groups are those which are substantially inert or unreactive at ambient conditions with the anhydride groups. As used in the specification the term "substantially inert and unreactive at ambient conditions" is intended to mean that the atom or group is substantially inert to chemical reactions at ambient temperature and pressure with the anhydride group so as not to materially interfere in an adverse manner with the preparation and/or functioning of the compositions, additives, compounds, etc. of this invention in the context of its intended use. For example, small amounts of these atoms or groups can undergo minimal reaction with the anhydride group without preventing the making and using of the invention as described herein. In other words, such reaction, while technically discernible, would not be sufficient to deter the practical worker of ordinary skill in the art from making and using the invention for its intended purposes. Suitable substituent groups are alkyl groups, hydroxyl groups, tertiary amino groups and halogens. When more than one substituent is present they may be the same or different.

It is to be understood that while many substituent groups are substantially inert or unreactive at ambient conditions with the anhydride group they will react with the anhydride group under conditions effective to allow reaction of the anhydride group with the reactive amino groups of the polyamine. Whether these groups are suitable substituent groups which can be present on the polyanhydride depends, in part, upon their reactivity with the anhydride group. Generally, if they are substantially more reactive with the anhydride group than the anhydride group is with the reactive amino group, they will tend to materially interfere in an adverse manner with the preparation of the dispersants of the present invention and may be present on the polyanhydride. An example of such a reactive but suitable group is the hydroxyl group. An example of an unsuitable substituent group is a primary amino group.

The hydrocarbon moieties optionally contain at least one hetero atom or group (defined hereinafter) in the chain. The hetero atom or groups are those that are substantially unreactive at ambient conditions with the anhydride groups. When more then one hetero atom or group is present they may be the same or different. The hetero atoms or groups are preferably separated from the anhydride groups by at least one intervening carbon atom. These hetero atom or group containing hydrocarbon moieties may contain at least one substituent group on at least one carbon atom. These substituent groups are the same as those described above as being suitable for the hydrocarbon moieties.

Suitable hetero atoms or groups are:

oxygen atoms (i.e., -O- or ether linkages in the carbon chain);
sulfur atoms (i.e. -S- or thioether linkages in the carbon chain);
carboxy groups

(i.e. 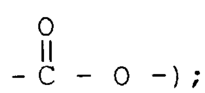);

carbonyl group

(i.e., 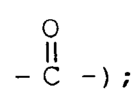);

sulfonyl group

(i.e., 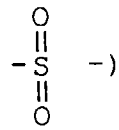

sulfinyl group

(i.e., 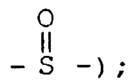;

and nitro groups.

It is critical to the present invention that the polyanhydrides contain at least two dicarboxylic acid anhydride moieties on the same molecule. These polyanhydrides may be further characterized as polyanhydrides containing at least two dicarboxylic acid anhydride moieties joined or connected by a polyvalent hydrocarbon moiety as described hereinbefore. These polyanhydrides are well known in the art and are generally commercially available or may be readily prepared by conventional and well known methods.

The polyanhydrides of the instant invention may be represented by the formula

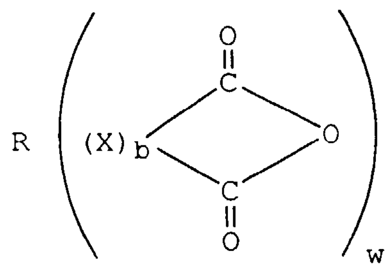

(V)

wherein:

b is 0 or 1;
w is the number of

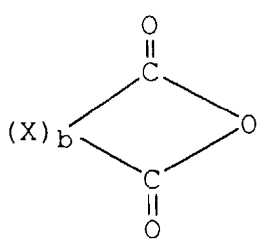

groups present on R, and is at least 2;
X is a q valent aliphatic acyclic hydrocarbon or substituted hydrocarbon radical containing from 2 to 8 carbon atoms which together with the two carbonyl carbon atoms forms a cyclic structure, where q is 3 or 4; and
R is a z valent hydrocarbon radical, substituted hydrocarbon radical, hydrocarbon radical containing at least one hetero atom or group, or substituted hydrocarbon radical containing at least one hetero atom or group, where z = (q-2)w with the proviso that if b=0 then q=4.

In Formula V, X is independently selected from aliphatic, preferably saturated, acylic trivalent or tetravalent hydrocarbon radicals or substituted hydrocarbon radicals containing from 2 to 8 carbon atoms which together with the two carbonyl carbon atoms forms a mono- or divalent cyclic structure. By trivalent or tetravalent hydrocarbon radicals is meant an aliphatic acyclic hydrocarbon, e.g., alkane, which has had removed from its carbon atoms three or four hydrogen atoms respectively. Some illustrative non-limiting examples of these tri- and tetravalent aliphatic acyclic hydrocarbon radicals include:

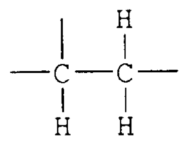
;

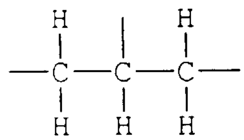
;

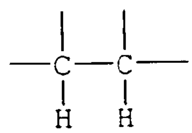
;

and

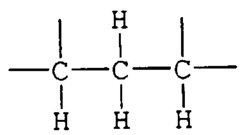

Since two of these valence bonds will be taken up by the two carbonyl carbon atoms there will be left one, in the case of X being trivalent, or two, in the case of X being tetravelent, valence bonds. Thus, if X is a trivalent radical the resulting cyclic structure formed between X and the two carbonyl carbon atoms will be monovalent while if X is a tetravalent radical the resulting cyclic structure will be divalent.

When X is a substituted aliphatic, preferably saturated, acyclic tri- or tetravalent hydrocarbon radical it contains from 1 to 4 substituent groups on one or more carbon atoms. If more than one substituent group is present they may be the same or different. These substituent groups are those that do not materially interfere in an adverse manner with the preparation and/or functioning of the composition, additives, compounds. of this invention in the context of its intended use. Some illustrative non-limiting examples of suitable substituent groups include alkyl radicals, preferably $C_1$ to $C_5$ alkyl radicals; halogens, preferably chlorine and bromine, and hydroxyl radicals. However, x is preferably unsubstituted.

When b is zero in Formula V the two carbonyl carbon atoms are bonded directly to the R moiety. An illustrative non-limiting example of such a case is cyclohexyl dianhydride; i.e.,

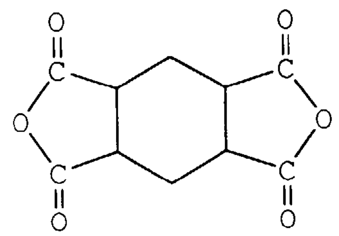

In this cyclohexyl dianhydride R is a tetravalent cycloaliphatic hydrocarbon radical, i.e., z=4, with q=4 since b is zero, and w=2.

In formula V, w is an integer of at least 2. The upper limit of w is the number of replaceable hydrogen atoms present on R if b is one and x is a trivalent radical, or one half the number of replaceable hydrogen atoms present on R if b is one and x is a tetravalent radical or if b is zero. Generally, however, w has an upper value not greater than 10, preferably 6, and more preferably 4.

The hydrocarbon radical R in formula V contains from 2 to 50 carbon atoms and may be aliphatic, either saturated or unsaturated, cycloaliphatic, aromatic, or aliphatic-aromatic. They may be saturated or unsaturated, e.g., contain one or more ethylenic unsaturation sites. They may be polymeric or monomeric.

The aliphatic hydrocarbon radicals represented by R may be straight chain or branched. The cycloaliphatic radicals are preferably those containing from 4 to 16 ring carbon atoms. They may contain substituent groups as defined hereinbefore, e.g., lower alkyl groups, on one or more ring carbon atoms. These cycloaliphatic radicals include, for example, cycloalkylene, cycloalkylidine, cycloalkanetriyl, and cycloalkanetetrayl radicals. The aromatic radicals are typically those containing from 6 to 12 ring carbon atoms.

It is to be understood that the term "aromatic" as used in the specification and the appended claims is not intended to limit the polyvalent aromatic moiety represented by R to a benzene nucleus. Accordingly it is to be understood that the aromatic moiety can be for example a pyridine nucleus, a thiophene nucleus, a 1,2,3,4-tetrahydronaphthalene nucleus or a polynuclear aromatic moiety. Such polynuclear moieties can be of the fused type; that is, wherein at least one aromatic nucleus is fused at two points to another nucleus such as found in naphthalene, anthracene and the azanaphthalenes. Alternatively, such polynuclear aromatic moieties can be of the linked type wherein at least two nuclei (either mono- or polynuclear) are linked through bridging linkages to each other. Such bridging linkages can be chosen from the group consisting of carbon-to-carbon single bonds, ether linkages, kero linkages, sulfide linkages, polysulfide linkages of 2 to 6 sulfur atoms, sulfinyl linkages, sulfonyl linkages, methylene linkages; alkylene linkages, di-(lower alkyl)-methylene linkages, lower alkylene ether linkages, alkylene kero linkages, lower alkylene sulfur linkages, lower alkylene polysulfide linkages of 2 to 6 carbon atoms, and mixture of such divalent bridging linkages.

When the aromatic moiety, Ar, is, for example, a divalent linked polynuclear aromatic moiety it can be represented by the general formula

$$- Ar -(Lng - Ar)-_{w}$$

wherein w is an integer of 1 to 10, preferably 1 to 8, more preferably 1, 2 or 3; Ar is a divalent aromatic moiety as described above, and each Lng is a bridging linkage individually chosen form the group consisting of carbon-to-carbon single bonds, ether linkages (e.g.-o-), keto linkages (e.g.,

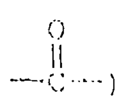 ,

sulfide linkages (e.g., -S-), polysulfide linkages of 2 to 6 sulfur atoms (e.g., -S2-6-), sulfinyl linkages (e.g.,-S(O)-), sulfonyl linkages (e.g., -S(O)2-), lower alkylene linkages
(e.g., - $CH_2$ -, -$CH_2$ - $CH_2$,

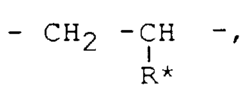

etc.
di(lower alkyl) -methylene linkages (e.g., - $CR^*_2$-), lower alkylene ether linkages (e.g., - $CH_2$ - O -, - $CH_2$ - O - $CH_2$ -, - $CH_2$ - $CH_2$ - O -, - $CH_2CH_2OCH_2CH_2$ -,

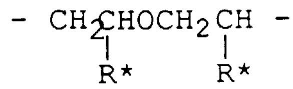

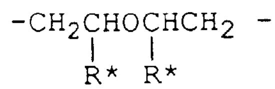

etc.) lower alkylene sulfide linkages (e.g., wherein one or more -O-'s in the lower alkylene ether linkages is replaced with an -S- atom), lower alkylene polysulfide linkages (e.g., wherein one or more -O-'s is replaced with a -$S_2$-group), with R* being a lower alkyl group.

Illustrative of such divalent linked polynuclear aromatic moieties are those represented by the formula

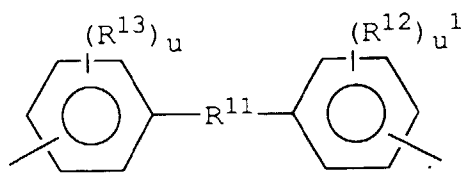

wherein $R^{12}$ and $R^{13}$ are independently selected from hydrogen and alkyl radicals, preferably alkyl radicals containing from 1 to 20 carbon atoms; $R^{11}$ is selected from alkylene, alkylidene, cycloalkylene, and cycloalkylidene radicals; and u and $u_1$ are independently selected from integers having a value of from 1 to 4.

The aliphatic-aromatic radicals are those containing from 7 to 50 carbon atoms.

Some illustrative non-limiting examples of polyanhydrides include

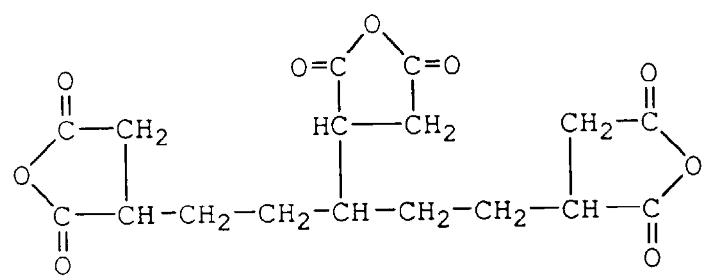

Included within the scope of the polyanhydrides of the instant invention are the dianhydrides. The dianhydrides include those represented by the formula

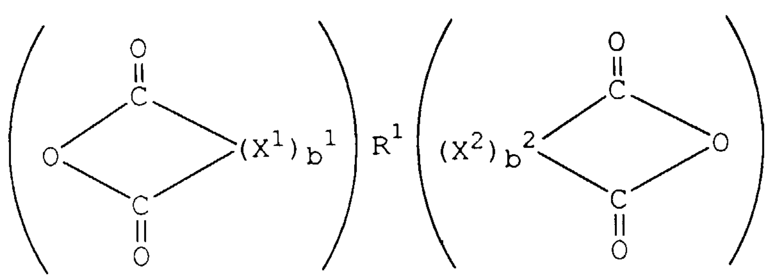

(VI)

wherein:

$b^2$ is 0 or 1;
$b^1$ is 0 or 1;
$X^2$ is a $q^2$ valent aliphatic acyclic hydrocarbon radical or substituted hydrocarbon radical containing from 2 to 8 carbon atoms which together with the two carbonyl carbon atoms forms a cyclic structure, where $q^2$ is 3 or 4;
$X^1$ is a $q^1$ valent aliphatic acyclic hydrocarbon radical or substituted hydrocarbon radical containing from 2 to 8 carbon atoms which together with the two carbonyl carbon atoms form a cyclic structure, where $q^1$ is 3 or 4;
$R^1$ is a $z^1$ valent hydrocarbon radical containing 2 to 50 carbon atoms, optionally substituted and/or containing at least one hetero atom or group as described hereinbefore, where $z^1 = (q^2 + q^1)-4$, with the proviso that if $b^1$ is zero than $q^2$ is 4 and if $b^1$ is zero than $q^1$ is 4.
$X^2$ and $X^1$ are preferably alkanetriyls or alkanetetrayls containing from 2 to 8 carbon atoms.
$R^1$ may be a divalent, trivalent, or tetravalent, i.e., $z^1$ is an integer having a value of from 2 to 4 inclusive, hydrocarbon radical. The hydrocarbon radicals represented by $R^1$ may be aliphatic, either saturated or unsaturated, cycloalphatic, aromatic, or aliphatic-aromatic.

The dianhydrides of Formula VI wherein R is a divalent radical may be represented by the Formula

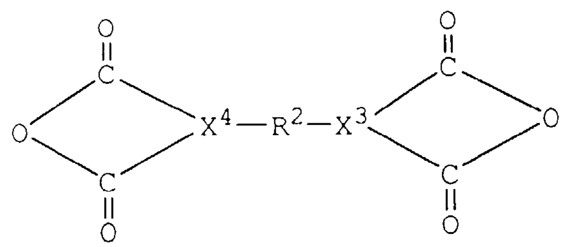

VIa

wherein:

$R^2$ is a divalent hydrocarbon radical containing 2 to 5 carbon atoms, optionally substituted and/or containing at least one hetero atom or group as described hereinbefore.
$X^3$ is a trivalent aliphatic acyclic hydrocarbon or substituted hydrocarbon radical containing from 2 to 8 carbon atoms which together with the two carbonyl carbon atoms forms a cyclic structure; and
$X^4$ is a trivalent aliphatic acyclic hydrocarbon or substituted hydrocarbon radical containing from 2 to 8 carbon atoms which together with the two carbonyl carbon atoms forms a cyclic structure.

The divalent hydrocarbon radicals represented by $R^2$ include the alkylene, alkenylene, cycloalkylene, cycloalkylidene, arylene, alkarylene and arylalkenylene radicals. The alkylene radicals may be straight chain or branched. Typical cycloalkylene and cycloalkylidene radicals are there containing from 4 to 16 ring carbon atoms. The cycloalkylene and cyclo-alkylidene radicals may contain substituent groups, e.g., lower alkyl groups, on one or more ring carbon atoms. When more than one substituent group is present they may be the same or different. Typical arylene radicals are those containing from 6 to 12 ring carbons, e.g., phenylene, naphthylene and biphenylene. Typical alkarylene and aralkylene radicals are those containing from 7 to 50 carbon atoms.

The substituted divalent hydrocarbon radicals represented by $R^2$ are those divalent hydrocarbon radicals defined above which contain at least one substituent group, typically from 1 to 5 substituent groups, of the type described hereinbefore.

The divalent hydrocarbon radicals $R^1$ containing at least one hetero atom or group represented by $R^1$ are those divalent hydrocarbon radicals defined above which contain at least one hetero atom or group of the type defined hereinafore in the hydrocarbon chain.

Some illustrative non-limiting examples of dianhydrides of Formula VIa include

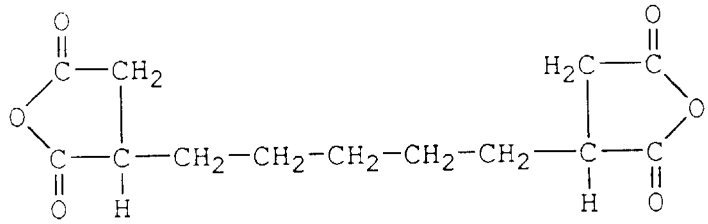

;

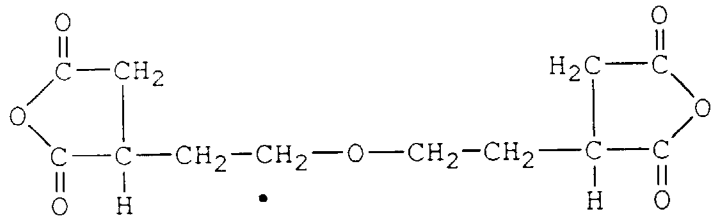

;

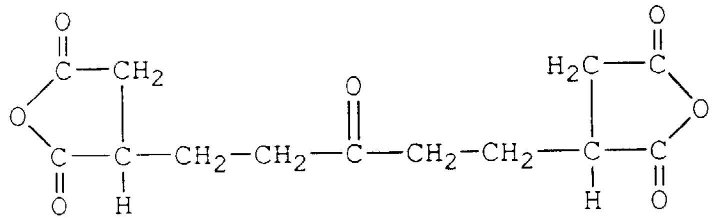

;

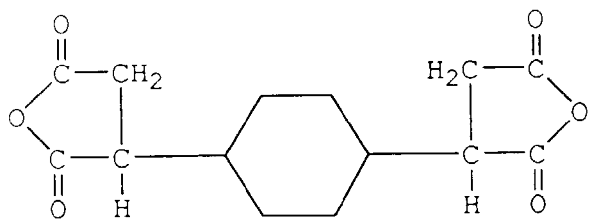

;

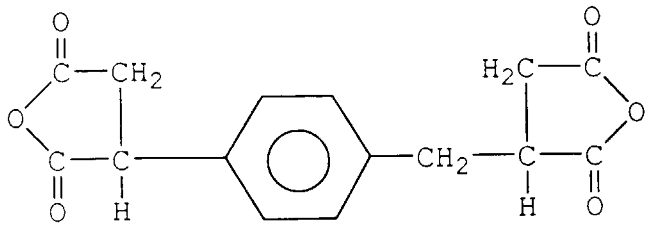

;

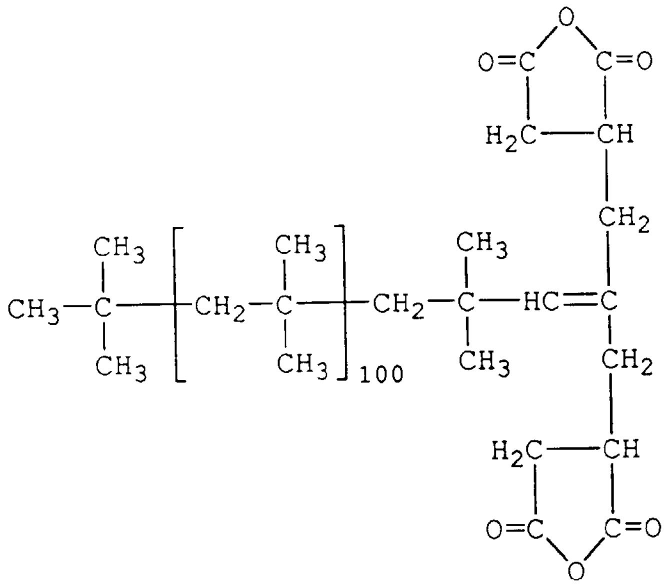

;

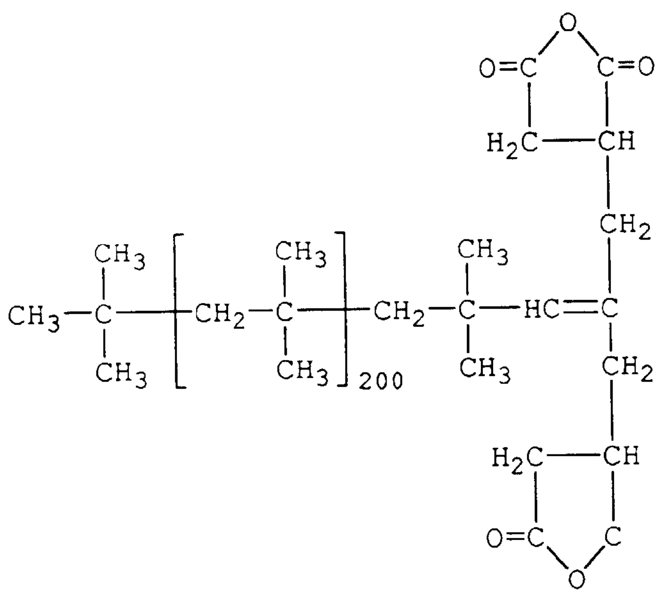

The dianhydrides of Formula VI wherein $R^1$ is a trivalent radical may he represented by the formulae

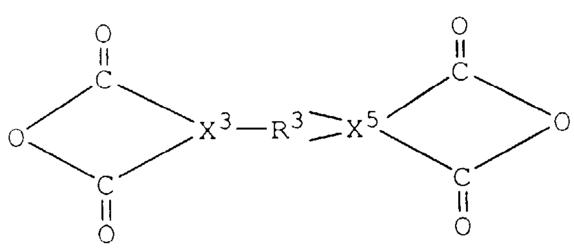

(VIb)

and

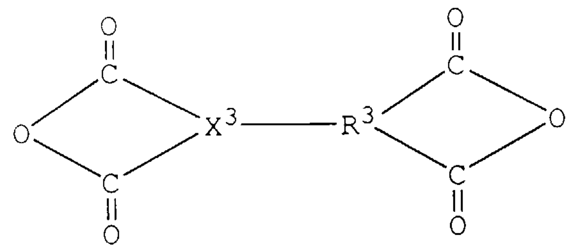

(VIb[1])

wherein:

$R^3$ is a trivalent hydrocarbon radical containing 2 to 50 carbon atoms, optionally substituted as disclosed hereinbefore;
$X^5$ is a tetravalent aliphatic acyclic hydrocarbon or substituted hydrocarbon radical containing from 2 to 8 carbon atoms which together with the carbonyl carbon atoms forms acyclic structure; and
$X^3$ is as defined hereinafore.

The trivalent hydrocarbon radicals represented by $R^3$ in Formulae VIb and VIb$^1$ are trivalent cycloaliphatic or aromatic hydrocarbon radicals. The trivalent cycloaliphatic hydrocarbon radicals represented by $R^3$ preferably contain from 3 to 16 ring carbon atoms. The trivalent aromatic hydrocarbon radicals represented by $R^3$ preferably contain from 6 to 12 ring carbon atoms. The trivalent substituted hydrocarbon radicals represented by $R^3$ are those trivalent hydrocarbon radicals described hereinafore which contain at least 1, preferably from 1 to 4, substituent groups of the type described hereinafore on the ring carbon atoms.

The tetravalent aliphatic acyclic hydrocarbon radicals represented by $X^5$ Formula Vb are those containing from 1 to 8 carbon atoms that together with the two carbonyl carbon atoms form a cyclic structure. These radicals include the alkanetetrayl radicals. The tetravalent substituted aliphatic acylic hydrocarbon radicals represented by $X^5$ in Formula VIb are those tetravalent aliphatic acyclic hydrocarbon radicals described hereinafore which contain at least one substituent group of the type described hereinafore.

Some illustrative non-limiting examples of the dianhydrides of Formulae VIb and VIb$^1$ include

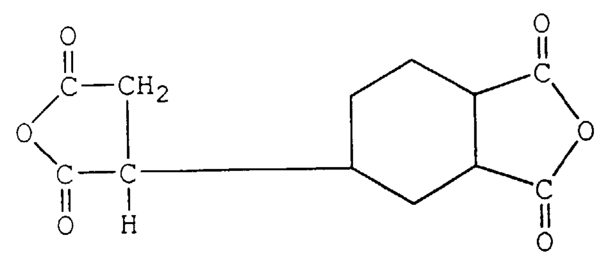

;

and

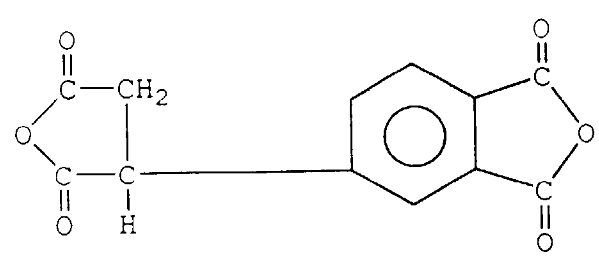

;

The dianhydrides of Formula VI wherein R' is a tetravalent radical may be represented by the formulae

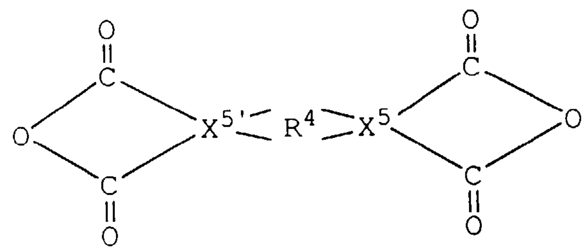

, (VIc)

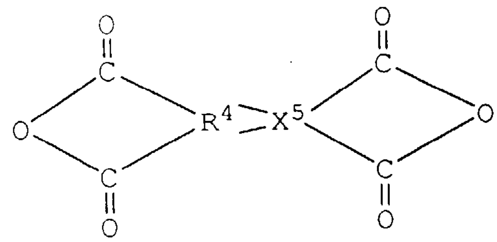

, (VIc')

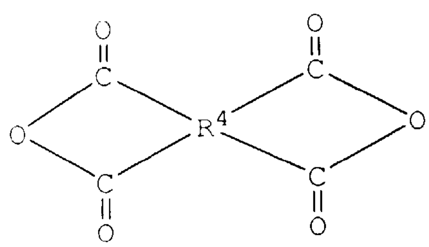

, (VIc'')

wherein:

$R^4$ is a tetravalent hydrocarbon radical containing 2 to 50 carbon atoms, or a optionally substituted as described hereinbefore;

$X^5$ is a tetravalent aliphatic acyclic hydrocarbon or substituted hydrocarbon radical containing from 2 to 8 carbon atoms which together with the carbonyl carbon atoms forms a cyclic structure; and

$X^5$ is a tetravalent aliphatic acyclic hydrocarbon or substituted hydrocarbon radical containing from 2 to 8 carbon atoms which together with the carbonyl carbon atoms forms a cyclic structure.

The tetravalent hydrocarbon radicals represented by $R^4$ in Formulae VIc - VIc" are tetravalent cycloaliphatic or aromatic hydrocarbon radicals. The tetravalent cycloaliphatic or aromatic hydrocarbon radicals preferably contain from 4 to 16 ring carbon atoms. The tetravalent aromatic hydrocarbon radicals preferably contain from 6 to 12 ring carbon atoms. The tetravalent substituted hydrocarbon radicals represented by $R^4$ are these tetravalent hydrocarbon radicals described above which contain at least one substituent group of the type described hereinafore on at least one carbon atom.

Some illustrative non-limiting examples of the dianhydrides of Formulae VIc - VIc" include

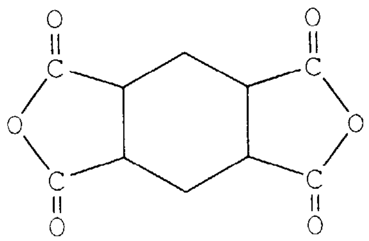

;

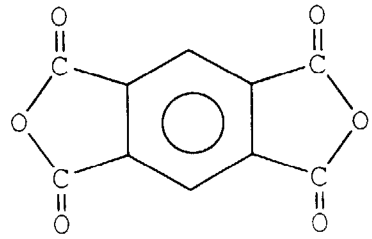

;

and

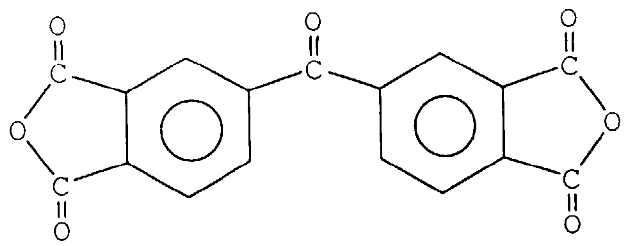

These polyanhydrides are reacted with the polyamines described hereinafore to produce the intermediate adducts which are then reacted with the aforedescribed hydrocarbyl substituted dicarboxylic acid producing material to yield the dispersants of the present invention.

The reaction between a polyamine and a polyanhydride to form the intermediate polyanhydride-polyamine adduct is described, for the case of a dianhydride, in Equation 1 above. In this reaction the different anhydride moieties in the same polyanhydride molecule react with the primary amino groups on different polyamine molecules to join or link together different polyamine molecules via the polyanhydride molecule.

If a polyanhydride containing more than two dicarboxylic anhydride groups per molecule, such as a trianhydride, is reacted with a polyamine such as TEPA then three molecules of polyamine will be joined or connected together by the polyanhydride. This is illustrated by the following reaction scheme:

Equation 3.

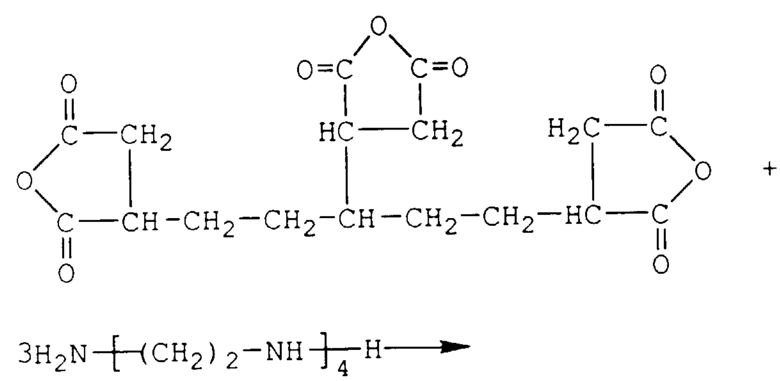

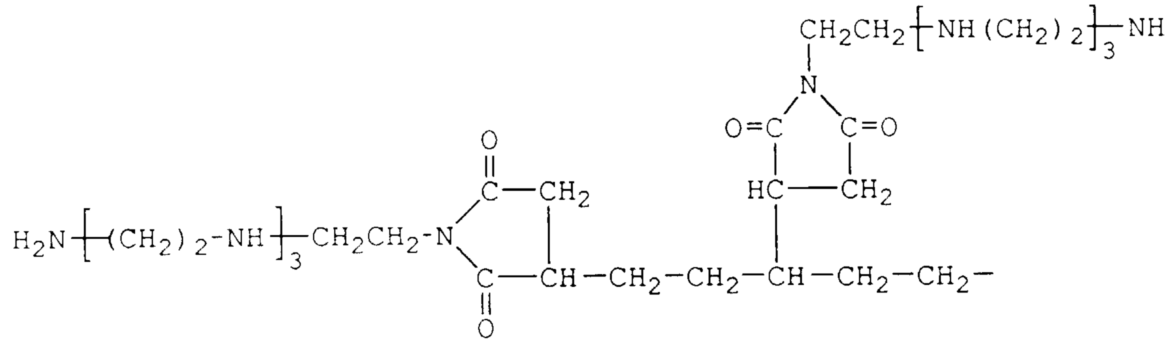

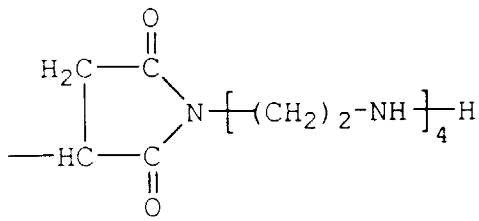

If a polyamine containing more than two, e.g., three, primary amino groups, per molecule is used then one such polyamine molecule may be linked or connected to two other polyamine molecules by three dianhydride molecules. In such case the three primary amino groups on each polyamine molecule react with anhydride groups on different polyanhydride molecules.

The chemistry of the polyanhydride-polyamine reaction is such that the primary amino functionality in the polyamine is more reactive than the secondary amino functionality with the anhydride group of the polyanhydride and therefore the product structure A, i.e., imide, illustrated in Equations 1 and 2 will be the favored product. It is also possible, however, that the secondary amino functionality or the hydroxyl functionality of the resulting adduct can react with further molecules of the polyanhydride to form a diversity of structures, including structures B and C in Equation 1.

In general the polyanhydride-polyamine intermediate adducts of the present invention comprise molecules of polyamines linked to each other by polyanhydride molecules. For purposes of illustration and exemplification only, and assuming that the polyamine is a polyamine of Formula I and the polyanhydride is a dianhydride of Formula V, the polyanhydride-polyamine intermediate adduct contains at least one of the following recurring structural units

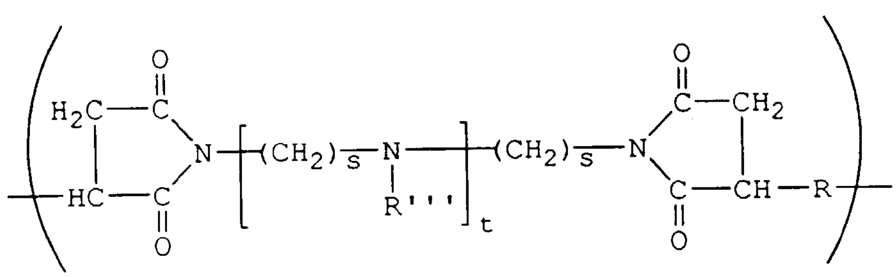

wherein R, R''', s and t are as defined hereinafore.

The stoichiometry of the polyanhydride and polyamine is one of the factors that determines the length of the polyanhydride-polyamine adduct, e.g., number of recurring structural units of Formula X. Generally, increasing the concentration in the reaction mixture of the polyanhydride, up to a point where there is present an equivalent amount of anhydride moieties per primary amino moieties, results in an increase in the length and molecular weight of the intermediate adduct.

Other factors which influence the length and molecular weight of the adduct are reaction times and reaction temperatures. Generally, assuming a fixed amount of polyanhydride in the polyanhydride-polyamine reaction mixture, a higher reaction temperature and/or a longer reaction time results in longer or higher molecular weight intermediate adduct product.

Reaction between the polyanhydride and polyamine is carried out by adding an amount of polyanhydride to the polyamine which is effective to couple or link at least some of the polyamine molecules. It is readily apparent to those skilled in the art that the amount of polyanhydride utilized depends upon a number of factors including (1) the number

of reactive, e.g., primary, amino groups present in the polyamine, (2) the number of anhydride groups present in the polyanhydride, (3) and the number of polyamine molecules that it is desired to react, i.e., the degree of coupling or chain length of the polyanhydride-polyamine adduct it is desired to achieve.

Generally, however, it is preferred to utilize an amount of polyanhydride such that there are present from 0.01 to 5 equivalents of anhydride groups per equivalent of reactive, e.g., primary, amino groups, preferably from 0.1 to 2 equivalents of anhydride groups per equivalent of primary amino group. It is preferred, however, that the polyamine be present in excess in the polyanhydride-polyamine reaction mixture.

In order to form the dispersants of the present invention the long chain hydrocarbyl substituted dicarboxylic acid material (ii) is reacted with a polyanhydride-polyamine adduct. The amounts of polyanhydride adduct and hydrocarbyl substituted dicarboxylic acid material utilized in this reaction are amounts which are effective to form the dispersants of the instant invention, i.e., dispersant forming effective amounts. It will be apparent to those skilled in the art that the amount of polyanhydride adduct utilized will depend, in part, upon the number of reactive primary amino groups in the polyanhydride-polyamine adduct, present in said polyanhydride adduct which are available for reaction with, for example, carboxylic acid or anhydride groups of the hydrocarbyl substituted dicarboxylic acid material. Generally, however, the amount of the polyanhydride adduct is such that sufficient polyanhydride adduct is present to provide from 0.5 to 15, preferably from 1 to 10, and more preferably from 2 to 4 reactive groups or equivalents, e.g., primary amino groups, for each carboxylic acid or anhydride group or equivalent present in the hydrocarbyl substituted dicarboxylic acid material.

The reaction conditions under which the reaction between the polyanhydride adduct reactant and the hydrocarbyl substituted dicarboxylic acid material reactant is carried out are those that are effective for coreaction between said reactants to occur. Generally, the reaction will proceed at from 50° to 250°C, preferably 100 to 210°C. While superatmospheric pressures are not precluded, the reaction generally proceeds satisfactorily at atmospheric pressure. The reaction may be conducted using a mineral oil, e.g., 100 neutral oil, as a solvent. An inert organic co-solvent, e.g., xylene or toluene, may also be used. The reaction time generally ranges from 0.25 to 24 hours.

The reaction between the polyanhydride-polyamine adduct and the hydrocarbyl substituted dicarboxylic acid material may be exemplified by the following reaction scheme which represents the reaction of polyisobutenyl succinic anhydride with an alkylene dianhydride/tetraethylene pentamine adduct:

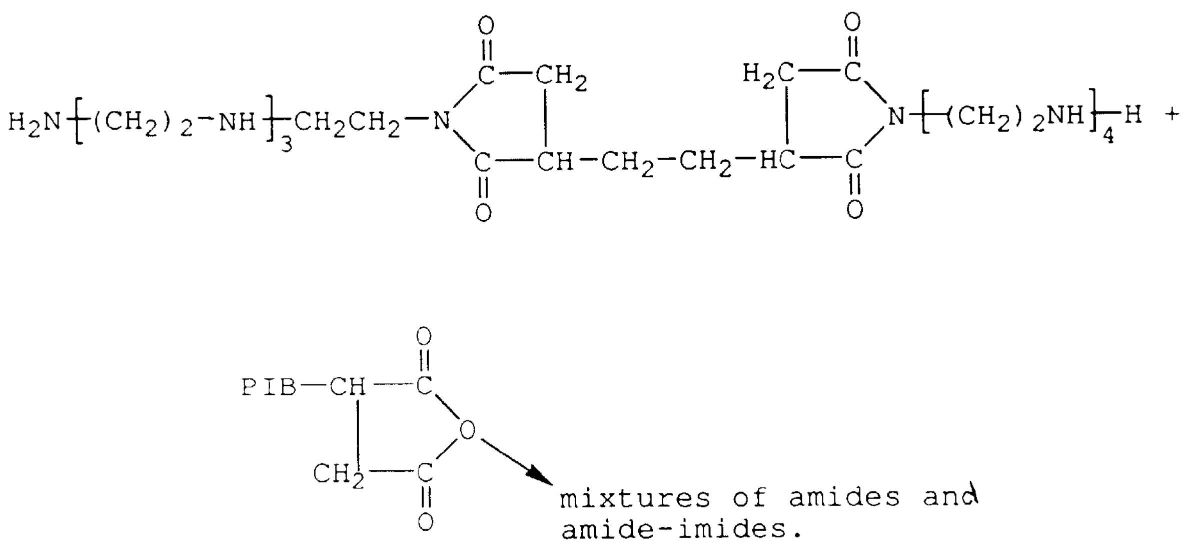


The imide reaction product of this reaction may be represented by structure A above, while the imide-amide product is represented by structure B and C above.

Further aspects of the present invention reside in the formation of metal complexes and other post-treatment derivatives, e.g., borated derivatives, of the novel additives prepared in accordance with this invention. Suitable metal complexes may be formed in accordance with known techniques of employing a reactive metal ion species during or after the formation of the present polyanhydride derived dispersant materials. Complex-forming metal reactants include the nitrates, thiocyanates, halides, carboxylates, phosphates, thio-phosphates, sulfates, and borates of transition metals such as iron, cobalt, nickel, copper, chromium, manganese, molybdenum, tungsten, ruthenium, palladium, platinum, cadmium, lead, silver, mercury, antimony and the like. Prior art disclosures of these complexing reactions may be found in US-A-3,306,908 and Re. 26,443.

Post-treatment compositions include those formed by reacting the novel additives of the present invention with one or more post-treating reagents, usually selected from the group consisting of boron oxide, boron oxide hydrate, boron halides, boron acids, sulfur, sulfur chlorides, phosphorous sulfides and oxides, carboxylic acid or anhydride acylating agents, anhydrides and episulfides and acrylonitriles. The reaction of such post-treating agents with the novel additives of this invention is carried out using procedures known in the art. For example, boration may be accomplished in accordance with the teachings of US-A-3,254,025 by treating the additive compound of the present invention with a boron oxide, halide, ester or acid. Treatment may be carried out by adding 1-3 wt. % of the boron compound, preferably boric acid, and heating and stirring the reaction mixture at 135°C to 165°C for 1 to 5 hours followed by nitrogen stripping and filtration, if desired. Mineral oil or inert organic solvents facilitate the process.

The compositions produced in accordance with the present invention have been found to be particularly useful as fuel oil additives.

When the compositions of this invention are used in normally liquid petroleum fuels, such as middle distillates boiling from 66°C (150°F) to 427°C (800°F). including kerosene, diesel fuels, home heating fuel oil, jet fuels, etc., a concentration of the additive in the fuel in the range of typically from 0.001 wt. % to 0.5 wt. %, preferably 0.005 wt. % to 0.2 wt. %, based on the total weight of the composition, will usually be employed. These additives can contribute fuel stability as well as dispersant activity and/or varnish control behavior to the fuel.

In the following Examples, all parts are by weight and all molecular weights are number weight average molecular weights.

The following example illustrates a dispersant falling outside the scope of the instant invention in that no polyanhydride is utilized in the preparation of this dispersant. This example is presented for comparative purposes only.

COMPARATIVE EXAMPLE 1

Into a reactor vessel are charged, under a nitrogen blanket, 134 grams of S150N mineral oil, 4.7 grams (0.05 mole) of tetraethylene pentamine and 197.84 grams (0.1 mole) of polyisobutylene succinic anhydride (reaction product of maleic anhydride and polyisobutylene having a $\overline{M}_n$ of about 2,225, said reaction product having a polyisobutylene to succinic anhydride ratio of about 1:1.1). The resultant reaction mixture is heated at 150°C and sparged with nitrogen for 3 hours. The oil solution containing the product is filtered and the resultant filtered solution of the product has a viscosity at 100°C of 408 centistokes.

The following example illustrate a dispersant of the instant invention.

EXAMPLE 2

Into a reactor vessel are, charged under a nitrogen blanket, 140 grams of S150N mineral oil, 100 cc of toluene, 20 cc of isopropanol 5.4 grams (0.025 mole) of paramellitic dianhydride, and 4.7 grams (0.05 mole) of tetraethylene pentamine. This reaction mixture is heated at 120°C for one hour. At the end of this one-hour period 197.8 grams (0.1 mole) of polyisobutylene succinic anhydride of the type used in Comparative Example 1 are introduced into the reactor vessel and the resultant reaction mixture is heated at 150°C for 3 hours while sparging with nitrogen. the solution containing the product is filtered and the resultant filtered solution of the product has a viscosity at 100°C of 750 centistokes (mPa.s).

As can be seen the viscosity of the oil solution of the dispersant of the instant invention (Example 2) is higher than that of the oil solution of conventional dispersant of Comparative Example 1.

## Claims

**1.** A fuel oil composition comprising a major amount of fuel oil and a minor amount of an oil soluble dispersant additive comprising the reaction product of:

(i) at least one intermediate adduct comprised of the reaction products of:

(a) at least one polyanhydride containing at least two dicarboxylic acid anhydride groups joined by a polyvalent hydrocarbon moiety containing from 2 to 50 carbon atoms and optionally containing at least one of oxygen, sulfur, carboxy, carbonyl, sulfonyl, sulfinyl and nitro groups in the hydrocarbon chain and/or being substituted by one or more alkyl, hydroxyl, tertiary amino and halogen groups; and
(b) at least one member selected from polyols, aminoalcohols and polyamines, said polyamines containing at least two reactive amino groups, one being a primary amine group and the other being a primary or secondary amine group, and

(ii) at least one member selected from:

(a) at least one long chain hydrocarbyl substituted $C_4$-$C_{10}$ dicarboxylic acid producing material in which the long chain hydrocarbyl group has a number average molecular weight from 500 to 6,000, and
(b) at least one long chain hydrocarbyl substituted hydroxy aromatic material and at least one aldehyde wherein said long chain aromatic material comprises a phenol substituted by a hydrocarbyl group having from 50 to 300 carbon atoms.

**2.** A composition according to claim 1 wherein said dicarboxylic acid producing material (ii)(a) is a reaction product of an olefin polymer of a $C_2$-$C_{18}$ monoolefin having a number average molecular weight from 500 to 6,000 and a $C_4$-$C_{10}$ monounsaturated dicarboxylic acid producing material wherein there are an average of 0.7 to 2.0 dicarboxylic acid producing moieties per molecule of said olefin polymer used in the reaction.

**3.** A composition according to claim 2 wherein said monounsaturated dicarboxylic acid producing material is maleic anhydride.

**4.** A composition according to claim 2 or claim 3, wherein said olefin polymer is polyisobutylene.

**5.** A composition according to claim 4 wherein the number average molecular weight of said polyisobutylene is from 800 to 2,500.

**6.** A composition according to any of claims 1 to 5, wherein the polyamine has from 2 to 60 total carbon atoms and from 2 to 12 nitrogen atoms.

**7.** A composition according to any of claims 1 to 6, wherein at least two reactive amino groups in the polyamine are primary amino groups.

**8.** A composition according to claim 7, wherein said polyamine further contains at least one secondary amino group.

**9.** A composition according to any of claims 1 to 8, wherein said polyamine is an aliphatic saturated amine represented by the formula:

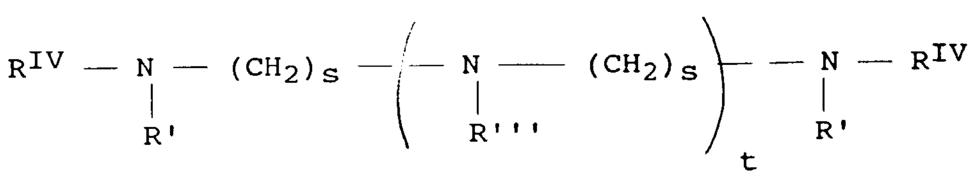

wherein :

$R^{IV}$, R' and R''' are independently selected from the group consisting of hydrogen, $C_1$ to $C_{25}$ straight, or branched chain alkyl radicals, $C_1$ to $C_{12}$ alkoxy $C_2$ to $C_6$ alkylene radicals, and $C_2$ to $C_{12}$ hydroxyl amino alkylene radicals, and $C_1$ to $C_{12}$ alkylamino $C_2$ to $C_6$ alkylene radicals:
each s is independently selected from integers having a value of from 2 to 6, and
t is a number of 0 to 10, with the proviso that when t = 0 at least one of $R^{IV}$ and R' is hydrogen such that there are at least two primary and/or secondary amino groups.

**10.** A composition according to claim 9 wherein said polyamine is selected from 1,2-diaminoethane, 1,3-diaminopropane, 1,4-diaminobutane, 1,6-diaminohexane, triethylene tetramine, tetraethylene pentamine, di-(1,3-propylene) triamine, diethylene triamine, N,N-di-(2-aminoethyl)ethylene diamine, and N-dodecyl-1,3-propane diamine.

**11.** A composition according to any of claims 1 to 8, wherein said polyamine is a polyoxyalkylene polyamine.

## Patentansprüche

**1.** Brennstoffölzusarualensetzung, die eine größere Menge Brennstofföl und eine geringere Menge eines öllöslichen

Dispergiermitteladditivs umfaßt, welches das Reaktionsprodukt von

(i) mindestens einem Zwischenaddukt, das aus den Reaktionsprodukten von

(a) mindestens einem Polyanhydrid, das mindestens zwei Dicarbonsäureanhydridgruppen enthält, welche durch eine mehrwertige Kohlenwasserstoffeinheit verbunden sind, die 2 bis 50 Kohlenstoffatome enthält und gegebenenfalls mindestens eine von Sauerstoff-, Schwefel-, Carboxy-, Carbonyl-, Sulfonyl-, Sulfinyl- und Nitrogruppen in der Kohlenwasserstoffkette enthält und/oder mit einer oder mehreren Alkyl-, Hydroxyl-, tertiären Amino- und Halogengruppen substituiert ist, und
(b) mindestens einem Mitglied ausgewählt aus Polyolen, Aminoalkoholen und Polyaminen, wobei die Polyamine mindestens zwei reaktive Aminogruppen enthalten und die eine eine primäre Aminogruppe und die andere eine primäre oder sekundäre Aminogruppe ist,

zusammengesetzt ist, und
(ii) mindestens einem Mitglied ausgewählt aus

(a) mindestens einem mit langkettigem Kohlenwasserstoff substituierten, $C_4$- bis $C_{10}$-Dicarbonsäure produzierenden Material, bei dem die langkettige Kohlenwasserstoffgruppe ein durchschnittliches Molekulargewicht (Zahlenmittel) von 500 bis 6 000 hat, und
(b) mindestens einem mit langkettigem Kohlenwasserstoff substituierten hydroxyaromatischen Material und mindestens einem Aldehyd, wobei das langkettige aromatische Material ein Phenol umfaßt, welches mit einer Kohlenwasserstoffgruppe mit 50 bis 300 Kohlenstoffatomen substituiert ist,

umfaßt.

**2.** Zusammensetzung nach Anspruch 1, bei dem das Dicarbonsäure produzierende Material (ii)(a) ein Reaktionsprodukt von einem Olefinpolymer aus einem $C_2$- bis $C_{18}$-Monoolefin mit einem durchschnittlichen Molekulargewicht (Zahlenmittel) von 500 bis 6 000 und einem einfach ungesättigte $C_4$- bis $C_{10}$-Dicarbonsäure produzierenden Material ist, wobei durchschnittlich 0,7 bis 2,0 Dicarbonsäure produzierende Einheiten pro Molekül des in der Umsetzung verwendeten Olefinpolymers vorhanden sind.

**3.** Zusammensetzung nach Anspruch 2, bei der das einfach ungesättigte Dicarbonsäure produzierende Material Maleinsäureanhydrid ist.

**4.** Zusammensetzung nach Anspruch 2 oder Anspruch 3, bei der das Olefinpolymer Polyisobutylen ist.

**5.** Zusammensetzung nach Anspruch 4, bei der das durchschnittliche Molekulargewicht (Zahlenmittel) des Polyisobutylens 800 bis 2 500 beträgt.

**6.** Zusammensetzung nach einem der Ansprüche 1 bis 5, bei der das Polyamin insgesamt 2 bis 60 Kohlenstoffatome und 2 bis 12 Stickstoffatome hat.

**7.** Zusammensetzung nach einem der Ansprüche 1 bis 6, bei der mindestens zwei reaktive Aminogruppen in dem Polyamin primäre Aminogruppen sind.

**8.** Zusammensetzung nach Anspruch 7, bei der das Polyamin außerdem mindestens eine sekundäre Aminogruppe enthält.

**9.** Zusammensetzung nach einem der Ansprüche 1 bis 8, bei der das Polyamin ein aliphatisches gesättigtes Amin mit der Formel

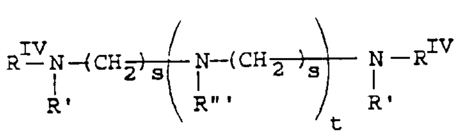

ist, in der

$R^{IV}$, R' und R''' unabhängig ausgewählt sind aus der Gruppe bestehend aus Wasserstoff, geradkettigen oder verzweigten $C_1$- bis $C_{25}$-ASky-resten, $C_1$- bis $C_{12}$-ASkoxy-$C_2$- bis -$C_6$-alkylenresten und $C_2$- bis $C_{12}$-Hydroxylaminoalkylenresten und $C_1$- bis $C_{12}$-Alkylamino-$C_2$- bis -$C_6$-alkylenresten,
jedes s unabhängig ausgewählt ist aus ganzen Zahlen mit einem Wert von 2 bis 6, und
t eine Zahl von 0 bis 10 ist, mit der Maßgabe, daß wenn t gleich 0 ist, mindestens eines von $R^{IV}$ und R' Wasserstoff ist, so daß mindestens zwei primäre und/oder sekundäre Aminogruppen vorhanden sind.

**10.** Zusammensetzung nach Anspruch 9, bei der das Polyamin ausgewählt ist aus 1,2-Diaminoethan, 1,3-Diaminopropan, 1,4-Diaminobutan, 1,6-Diaminohexan, Triethylentetramin, Tetraethylenpentamin, Di-(1,3-propylen)triamin, Diethylentriamin, N,N-Di-(2-aminoethyl)ethylendiamin und N-Dodecyl-1,3-propandiamin.

**11.** Zusammensetzung nach einem der Ansprüche 1 bis 8, bei der das Polyamin ein Polyoxyalkylenpolyamin ist.

**Revendications**

**1.** Composition de fuel-oil comprenant une quantité dominante d'un fuel-oil et une petite quantité d'un additif dispersant, soluble dans l'huile, comprenant le produit de réaction :

(i) d'au moins un produit d'addition intermédiaire constitué des produits de réaction :

(a) d'au moins un polyanhydride contenant au moins deux groupes anhydride d'acide dicarboxylique joints par un groupement hydrocarboné polyvalent contenant 2 à 50 atomes de carbone et contenant facultativement au moins un des représentants du groupe consistant en oxygène, soufre, groupes carboxy, carbonyle, sulfonyle, sulfinyle et nitro dans la chaîne hydrocarbonée et/ou étant substitué avec un ou plusieurs groupes alkyle, hydroxyle, amino tertiaire ou halogéno ; et
(b) d'au moins un membre du groupe consistant en polyols, amino-alcools et polyamines, lesdites polyamines contenant au moins deux groupes amino réactifs, l'un étant un groupe amine primaire et l'autre étant un groupe amine primaire ou secondaire, et

(ii) d'au moins un membre du groupe consistant en :

(a) au moins une matière productrice d'acide dicarboxylique en $C_4$ à $C_{10}$ à substituant hydrocarbyle à chaîne longue dans laquelle le groupe hydrocarbyle à chaîne longue a une moyenne numérique du poids moléculaire de 500 à 6000, et
(b) au moins une matière hydroxy-aromatique à substituant hydrocarbyle à chaîne longue et au moins un aldéhyde, ladite matière aromatique à chaîne longue comprenant un phénol substitué avec un groupe hydrocarbyle ayant 50 à 300 atomes de carbone.

**2.** Composition suivant la revendication 1, dans laquelle la matière productrice d'acide dicarboxylique (ii) (a) est un produit de réaction d'un polymère oléfinique d'une mono-oléfine en $C_2$ à $C_{18}$ ayant une moyenne numérique du poids moléculaire de 500 à 6000 et une matière productrice d'acide dicarboxylique mono-insaturé en $C_4$ à $C_{10}$, dans laquelle il existe un nombre moyen de 0,7 à 2,0 groupements producteurs d'acide dicarboxylique par molécule dudit polymère oléfinique utilisé dans la réaction.

**3.** Composition suivant la revendication 2, dans laquelle la matière productrice d'acide dicarboxylique mono-insaturé est l'anhydride maléique.

**4.** Composition suivant la revendication 2 ou la revendication 3, dans laquelle le polymère oléfinique est le polyisobutylène.

**5.** Composition suivant la revendication 4, dans laquelle la moyenne numérique du poids moléculaire du polyisobutylène est comprise dans l'intervalle de 800 à 2500.

**6.** Composition suivant l'une quelconque des revendications 1 à 5, dans laquelle la polyamine a un nombre total d'atomes de carbone de 2 à 60 et un nombre d'atomes d'azote de 2 à 12.

**7.** Composition suivant l'une quelconque des revendications 1 à 6, dans laquelle au moins deux groupes amino réactifs dans la polyamine sont des groupes amino primaires.

**8.** Composition suivant la revendication 7, dans laquelle la polyamine contient en outre au moins un groupe amino secondaire.

**9.** Composition suivant l'une quelconque des revendications 1 à 8, dans laquelle la polyamine est une amine saturée aliphatique représentée par la formule :

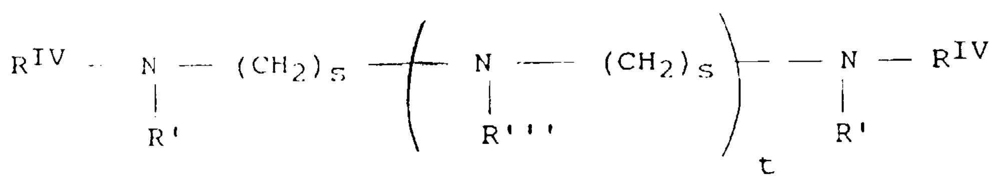

dans laquelle :

$R^{IV}$, R' et R''' sont choisis, indépendamment, dans le groupe consistant en l'hydrogène, des radicaux alkyle en $C_1$ à $C_{25}$ droits ou à chaîne ramifiée, des radicaux (alkoxy en $C_1$ à $C_{12}$)-(alkylène en $C_2$ à $C_6$), des radicaux hydroxyamino-alkylène en $C_2$ à $C_{12}$ et des radicaux (alkyle en $C_1$ à $C_{12}$)-amino-(alkylène en $C_2$ à $C_6$) ;
chaque indice s est choisi, indépendamment, parmi des nombres entiers ayant une valeur de 2 à 6, et
t est un nombre de 0 à 10, sous réserve que, lorsque t est égal à 0, au moins un des groupes $R^{IV}$ et R' représente l'hydrogène de telle sorte qu'il existe au moins deux groupes amino primaires et/ou secondaires.

**10.** Composition suivant la revendication 9, dans laquelle la polyamine est choisie entre le 1,2-diaminoéthane, le 1,3-diaminopropane, le 1,4-diaminobutane, le 1,6-diaminohexane, le triéthylène-tétramine, la tétra-éthylènepentamine, la di- (1,3-propylène)-triamine, la diéthylènetriamine, la N,N-di-(2-aminoéthyl)éthylène-diamine et la N-dodécyl-1,3-propane-diamine.

**11.** Composition suivant l'une quelconque des revendications 1 à 8, dans laquelle la polyamine est une polyoxyalkylène-polyamine.